# EUROPÄISCHE PATENTSCHRIFT

(11) **EP 2 838 749 B1**
(45) Veröffentlichungstag und Bekanntmachung des Hinweises auf die Patenterteilung: **27.04.2016**
(21) Anmeldenummer: 12742806.8
(22) Anmeldetag: 27.07.2012
(51) Int. Cl.: B60K 28/04, B60W 10/06, B60W 10/30, B60R 25/04, B60K 28/00, B60R 16/03, B60W 30/18

(54) **KRAFTWAGEN UND VERFAHREN BETREFFEND DAS ABSCHALTEN EINER ANTRIEBSEINRICHTUNG DES KRAFTWAGENS**
MOTOR VEHICLE, AND METHOD RELATING TO THE TURNING OFF OF A DRIVE DEVICE IN A MOTOR VEHICLE
VÉHICULE AUTOMOBILE ET PROCÉDÉ CONCERNANT LA COUPURE D'UN DISPOSITIF DE PROPULSION DU VÉHICULE AUTOMOBILE

(30) Priorität: 19.04.2012 DE 102012007835
(43) Veröffentlichungstag der Anmeldung: 25.02.2015
(73) Patentinhaber: Audi AG, 85045 Ingolstadt (DE)
(72) Erfinder: GEISSENHÖNER, Martin, 85055 Ingolstadt (DE)
(74) Vertreter: Brandt, Kai
(86) Internationale Anmeldenummer: PCT/EP2012/003202
(87) Internationale Veröffentlichungsnummer: WO 2013/156049

(56) Entgegenhaltungen:
- EP-A2- 1 820 700
- WO-A1-2011/070389
- DE-A1-102005 031 018
- FR-A1- 2 928 329

## Beschreibung

Die Erfindung betrifft ein Verfahren zum Abschalten einer Antriebseinrichtung eines Kraftwagens durch eine Steuereinrichtung in dem Fall, dass ein Fahrer des Kraftwagens diesen verlässt. Zu der Erfindung gehört auch ein Kraftwagen mit einer Antriebseinrichtung, einer Steuereinrichtung zum Starten und Abschalten der Antriebseinrichtung sowie einer Erkennungseinrichtung zum Überwachen einer Anwesenheit einer Person in dem Kraftwagen. Unter Antriebseinrichtung ist im Zusammenhang mit der Erfindung insbesondere eine Brennkraftmaschine, ein Elektromotor oder auch ein Hybridantrieb zu verstehen.

Ein Verfahren bzw. eine Vorrichtung betreffend das Abschalten einer Antriebseinrichtung eines Kraftwagens durch eine Steuereinrichtung in dem Fall, dass ein Fahrer des Kraftwagens diesen verlässt, ist aus der gattungsbildenden FR 2 928 329 A1 bekannt.

Verlässt ein Fahrer seinen Kraftwagen, so hat dies an sich in der Regel nicht zur Folge, dass hierdurch ein Betriebszustand des Fahrzeugs automatisch geändert wird. Das Fahrzeug bleibt in dem Zustand, in dem der Fahrer es verlassen hat. Läuft hierbei ein Verbrennungsmotor weiter, so produziert das Fahrzeug schädliche Abgase. Für eine Reduzierung des Kraftstoffverbrauchs bei kurzen Haltephasen, wie beispielsweise bei einem Halt an einer auf Rot geschalteten Ampel, kann für solche Fälle in einem Kraftwagen ein Start-Stop-System bereitgestellt sein, dass bei Erkennen einer Haltephase einen Verbrennungsmotor abstellt. Da hier der Fahrer für gewöhnlich den Kraftwagen nicht verlässt, werden elektrische Verbraucher des Kraftwagens weiterbetrieben, also etwa ein Radio oder eine Klimaanlage. In vergleichbarer Weise wird auch ein Verbrennungsmotor eines Hybridantriebs immer dann ausgeschaltet, wenn er nicht gebraucht wird, also auch zu Beginn einer Haltephase.

Hält ein Fahrer nun den Kraftwagen an und steigt er dann aus diesem aus, so wird auch in diesem Fall der Verbrennungsmotor von einem Start-Stop-System abgeschaltet. Für den Fahrer erscheint es dann, als sei der Kraftwagen bereits vollständig abgeschaltet und er könne sich für unbestimmte Zeit von dem Kraftwagen entfernen. Insbesondere wenn hierbei aber weiterhin elektrische Verbraucher mit einem verhältnismäßig großen Leistungsbedarf weiterbetrieben werden (z.B. eine Klimaanlage), so besteht hierbei die Gefahr, dass das Fahrzeug sich nicht wieder starten lässt. Für den Fall, dass es sich bei dem Kraftwagen um ein elektrisch angetriebenes Fahrzeug handelt, tritt dieser Fall besonders schnell ein.

Bei heutigen Kraftwagen ist das Risiko aus zwei weiteren Gründen besonders groß, dass ein Fahrer vergisst, seinen Kraftwagen vollständig abzuschalten. Zum einen wird ein Kraftwagen in vielen Fällen nicht mehr mit einem Zündschlüssel gestartet, der in ein Zündschloss gesteckt und umgedreht werden muss. Stattdessen ist als Starteinrichtung zum Starten des Kraftwagens oft nur noch ein Knopf zu drücken. Beim Aussteigen aus einem Kraftwagen kann es daher vorkommen, dass der Fahrer vergisst, den Knopf noch einmal zu drücken, um den Kraftwagens wieder vollständig abzuschalten. Zum anderen sind heutige Antriebseinrichtungen besonders geräuscharm. Insbesondere Elektromotoren erzeugen im Stillstand kein oder nur ein kaum hörbares Geräusch. Verlässt ein Fahrer den Kraftwagen, so wird er also nicht durch Geräusche des Kraftwagens daran erinnert, die Antriebseinrichtung abzuschalten. Wie bereits ausgeführt, kann diese Gefahr auch bei einem Kraftwagen mit Verbrennungsmotor gegeben sein, wenn dieser ein Start-Stop-System oder einen Hybridantrieb aufweist.

Um hier den Bedienkomfort für einen Fahrer zu verbessern, kann in einem Kraftwagen eine Erkennungseinrichtung bereitgestellt sein, welche überwacht, ob der Fahrer den Kraftwagen verlässt. In einem solchen Fall werden dann sofort, wenn der Fahrer den Kraftwagen nach einer Fahrt verlässt, sowohl der Antriebsmotor also auch die elektrischen Verbraucher des Kraftwagens abgeschaltet. Dies steigert die Wirtschaftlichkeit des Betriebs des Kraftwagens und verringert zugleich die Liegenbleibgefahr aufgrund einer entladenen Batterie. Durch das Signal der Erkennungseinrichtung wird zwischen der Präsenz und der Abwesenheit des Fahrers unterschieden. Die Erkennungseinrichtung weist deshalb gegenüber einem Start-Stop-System den Vorteil auf, dass ausdrücklich erkannt wird, ob der Fahrer den Kraftwagen verlässt oder verlassen hat.

Eine solche Erkennungseinrichtung ist aber nicht nur von Vorteil. Steigt ein Fahrer beispielsweise aus seinem Kraftwagen, um nur kurz ein Garagentor zu öffnen und dann den Kraftwagen in die Garage einzufahren, so wird der Fahrer erstaunt feststellen, dass sein Fahrzeug nicht mehr reagiert, wenn er beispielsweise auf das Gaspedal drückt. Der Fahrer muss dann erst wieder die Starteinrichtung bedienen, um weiterfahren zu können.

In dem Dokument D1 ist ein Kraftwagen mit einer Start-Stopp-Funktion beschrieben. Die Start-Stopp-Funktion wird unterbrochen, während ein Fahrer sich außerhalb des Kraftfahrzeugs befindet, um so ein versehentliches Starten des Motors durch eine andere Person zu verhindern. Die Unterbrechung der Start-Stopp-Funktion ist dabei nur möglich, wenn zuvor durch die Start-Stopp-Funktion selbst der Motor ausgeschaltet worden ist.

Eine Aufgabe der vorliegenden Erfindung besteht darin, den Bedienkomfort eines sich selbst abschaltenden Kraftwagens weiter zu verbessern.

Die Aufgabe wird durch ein Verfahren gemäß Patentanspruch 1 sowie durch einen Kraftwagen gemäß Patentanspruch 8 gelöst. Vorteilhafte Weiterbildungen des Verfahrens sind durch die Unteransprüche gegeben.

Erfindungsgemäß wird das Verfahren betreffend das Abschalten der Antriebseinrichtung bei Verlassen des Fahrzeugs dadurch erweitert, dass das Fahrzeug innerhalb eines kurzen Zeitraumes nach der Abschaltung der Zündung automatisch wieder startet, wenn der Fahrer z. B. das Bremspedal oder Kupplungspedal oder das Gaspedal tritt. Allgemein ist bei dem erfindungsgemäßen Kraftwagen vorgesehen, dass eine Erkennungseinrichtung signalisiert, wenn eine Person den Kraftwagen verlässt oder verlassen hat, und in diesem Fall eine Steuereinrichtung die Antriebseinrichtung abschaltet. Durch die Erkennungseinrichtung wird dann weiter überwacht, ob eine Person nach dem Verlassen des Wagens wieder in einem vorbestimmten Überwachungsbereich anwesend ist. Die Steuereinrichtung ist zusätzlich eingerichtet, nach einem zuvor erkannten Aussteigen der Person die Antriebseinrichtung wieder zu starten, falls die Erkennungseinrichtung erneut die Anwesenheit einer Person signalisiert.

Die Erfindung weist den Vorteil auf, dass die Antriebseinrichtung stets abgeschaltet wird, wenn sie nicht benötigt wird, weil der Fahrer gar nicht im Kraftwagen sitzt. Dennoch wird durch das automatische Abschalten die Bedienung des Kraftwagens nicht umständlicher. Bei Signalisieren einer erneuten Anwesenheit einer Person durch die Erkennungseinrichtung wird die Antriebseinrichtung wieder durch die Steuereinrichtung automatisch gestartet.

In Abhängigkeit davon, wie lange es dauert, um die Antriebseinrichtung wieder Betriebsbereit zu machen, und in Abhängigkeit von der Verfügung stehenden Sensorik für die Erkennung einer Anwesenheit einer Person, ist gemäß einer Ausführungsform des erfindungsgemäßen Verfahrens vorgesehen, die Antriebseinrichtung wieder zu starten, falls ein Näherkommen der Person zum Kraftwagen oder ein Einsteigen in den Kraftwagen oder ein Bedienen zumindest einer vorbestimmten Bedieneinrichtung des Kraftwagens erkannt wird. Bei der Bedieneinrichtung handelt es sich natürlich nicht um die Starteinrichtung, deren erneute Bedienung ja vermieden werden soll. Stattdessen wird hier eine andere Bedieneinrichtung des Kraftwagens überwacht, die der Fahrer auch dann betätigen würde, wenn die Antriebseinrichtung nicht abgeschaltet worden wäre. So ist insbesondere vorzusehen, durch die Erkennungseinrichtung ein Signal eines Sensors einer Pedale oder eines Gurts oder einer Fahrzeugtür zu überwachen. Mit anderen Worten wird die Antriebseinrichtung wieder gestartet, falls durch die Erkennungseinrichtung eine Betätigung einer aus den folgenden Fahrzeugkomponenten erkannt wird: einer Pedale, einer Fahrzeugtür, eines Gurts oder eines Gurtschlosses. Genauso kann vorgesehen sein, dass überwacht wird, ob das Lenkrad des Kraftwagens bewegt wird.

Gemäß einer anderen Ausführungsform des Verfahrens wird ein Sensor in einem Fahrzeugsitz überwacht, wie er beispielsweise auch im Rahmen einer Überprüfung verwendet wird, ob alle in Fahrzeug befindlichen Personen angeschnallt sind. Auch das Signal einer Alarmanlage kann ausgewertet werden, da diese ja in der Regel dazu ausgelegt ist, die Anwesenheit von Personen zu erkennen. Besonders bevorzugt wird eine Ortungseinrichtung zum Orten eines Identifikations-Chips eines Keyless-Go-Systems dazu verwendet, ein Signal betreffend die Anwesenheit einer Person zu erzeugen. Eine solche Ortungseinrichtung ist an sich aus dem Stand der Technik bekannt und ermöglicht es zu erkennen, ob sich ein Chip, welcher den Fahrer identifiziert, innerhalb oder außerhalb des Fahrzeugs befindet.

Die Verwendung eines Keyless-Go-Systems zur Realisierung der Erfindung kann auch dahingehend zum Weiterbilden des Verfahrens genutzt werden, dass eine Identität zumindest einer in einer Umgebung des Kraftwagens oder im Kraftwagen befindlichen Person überprüft und nur dann die Antriebseinrichtung wieder gestartet wird, falls diese Person durch die Erkennungseinrichtung als zur Benutzung des Kraftwagens berechtigt erkannt wird. Somit ist in vorteilhafter Weise vermieden, dass nach dem Aussteigen des Fahrers eine andere Person mit dem Kraftwagen wegfahren kann.

Der erwähnte Überwachungsbereich der Erkennungseinrichtung ergibt sich entsprechend aus der für die Realisierung der Erkennungseinrichtung verwendeten Technologie. Wird beispielsweise ein Bereich außerhalb des Kraftwagens überwacht, so umfasst der Überwachungsbereich entsprechend die Umgebung des Kraftwagens. Der Überwachungsbereich umfasst nur das innere des Kraftwagens, wenn eine Betätigung der darin befindlichen Bedienelemente als Hinweis darauf ausgewertet wird, dass sich wieder eine Person im Kraftwagen befindet.

Zweckmäßigerweise bleibt der Kraftwagen nach dem Aussteigen des Fahrers nicht für unbestimmte Zeit bereit, die Antriebseinrichtung wieder zu starten. Gemäß einer Ausführungsform des Verfahrens ist stattdessen vorgesehen, nur für ein vorbestimmtes Zeitintervall nach dem Abschalten der Antriebseinrichtung zu überwachen, ob eine Person in den Überwachungsbereich wiederkehrt. Danach können auch die Starteinrichtung und die Erkennungseinrichtung deaktiviert werden und somit der Stromverbrauch des Kraftwagens weiter reduziert werden. In diesem Zusammenhang kann auch vorgesehen sein, dass die Fahrzeugtüren automatisch verschlossen werden.

Eine andere Ausführungsform des Verfahrens bricht die Überwachung dann ab, wenn eine vorbestimmte Bedienhandlung an dem Kraftwagen vorgenommen wird. Insbesondere kann vorgesehen sein, die Überwachung zu beenden und auch die Erkennungs- und die Steuereinrichtung zu deaktivieren, falls eine Fahrzeugtür verschlossen wird. Denn dann steht fest, dass der Fahrer nicht plant, sich noch einmal in den Kraftwagen zu setzen und mit diesem weiterzufahren.

Zur Erfindung gehören auch Weiterbildung des erfindungsgemäßen Kraftwagens, welche Merkmale aufweisen, wie sie bereits im Zusammenhang mit den Weiterbildungen des erfindungsgemäßen Verfahrens beschrieben wurden. Aus diesem Grund sind die Merkmale der entsprechenden Weiterbildungen des erfindungsgemäßen Kraftwagens nicht noch einmal beschrieben.

Im Folgenden wird die Erfindung noch einmal genauer anhand eines konkreten Beispiels erläutert. Dazu zeigt:
Fig. 1 eine schematische Darstellung einer bevorzugten Ausführungsform des erfindungsgemäßen Kraftwagens; und
Fig. 2 ein Flussschaubild zu einer Ausführungsform des erfindungsgemäßen Verfahrens.

Bei dem im folgenden erläuterten Beispiel stellen die beschriebenen Komponenten des Kraftwagens und die beschriebenen Schritte des Verfahrens jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere bereits beschriebene Merkmale der Erfindung ergänzbar.

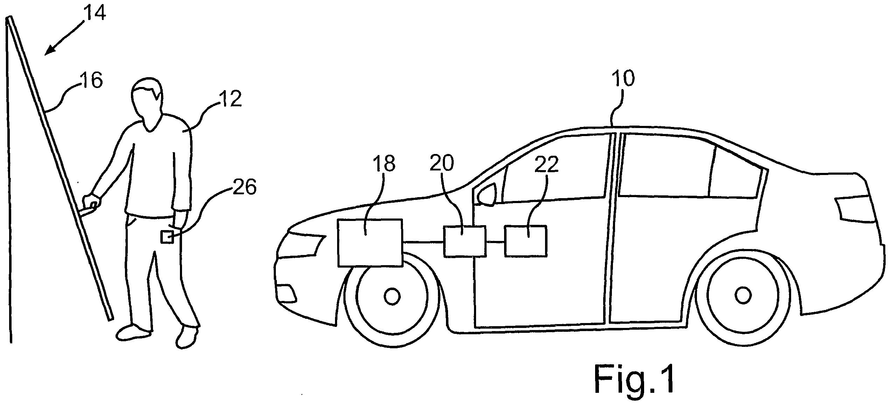

In Fig. 1 ist ein Kraftwagen 10 gezeigt, bei dem es sich beispielsweise um einen Personenkraftwagen handeln kann. Ein Fahrer 12 hat den Kraftwagen 10 vor einer Garage 14 angehalten und ist aus dem Kraftwagen 10 ausgestiegen, um ein Garagentor 16 der Garage 14 zu öffnen. Der Fahrer 12 plant, sich danach wieder in den Kraftwagen 10 zu setzen, und diesen in die Garage 14 hineinzufahren. Beim Aussteigen hat der Fahrer 12 nichts unternommen, um einen Antriebsmotor 18 des Kraftwagens 10 abzuschalten. Dennoch wird durch ein Steuergerät 20 des Kraftwagens 10 der Antriebsmotor 18 automatisch abgeschaltet, sobald der Fahrer 12 den Kraftwagen 10 verlassen hat. Bei dem Antriebsmotor 18 kann es sich beispielsweise um eine Brennkraftmaschine, einen Elektromotor oder auch einen Hybridantrieb handeln. Bei der Steuereinrichtung 20 kann es sich beispielsweise um ein Motorsteuergerät handeln.

Das Verlassen des Kraftwagens 10 wurde durch eine Erkennungseinrichtung 22 erkannt, die mit der Steuereinrichtung 20 gekoppelt ist und dieser das Verlassen signalisiert. Die Erkennungseinrichtung 22 kann eine oder mehrere aus einer Vielzahl möglicher Einrichtungen des Kraftwagens 10 umfassen, mittels welchen direkt oder indirekt auf die Anwesenheit des Fahrers 12 im Kraftwagen 10 oder in dessen Nähe rückgeschlossen werden kann. Beispielsweise kann die Erkennungseinrichtung 22 ein Keyless-Go-System umfassen, welches überprüft, ob sich ein Chip 26, den der Fahrer 12 bei sich trägt, innerhalb oder außerhalb des Kraftwagens 10 befindet. Durch die Erkennungseinrichtung 22 kann auch überprüft werden, ob ein Gurtschloss geöffnet wurde oder ein Gurt aufgerollt wurde, nachdem der Fahrer 12 sich abgeschnallt hat und den Gurt losgelassen hat. Auch ein Gewichtssensor in einem Fahrzeugsitz des Kraftwagens 10 kann Bestandteil der Erkennungseinrichtung 22 sein. Das Öffnen der Fahrertür kann ebenfalls durch einen entsprechenden Sensor erkannt werden.

Nachdem der Fahrer 12 das Garagentor 16 geöffnet hat, kehrt er wieder zu dem Kraftwagen 10 zurück, setzt sich in diesen hinein auf den Fahrersitz, schnallt sich an und fährt los. Der Antriebsmotor 18 ist dabei so rechtzeitig von der Steuereinrichtung 20 wieder gestartet worden, dass der Fahrer 12 nicht merkt, dass der Antriebsmotor 18 ausgeschaltet war, während der Fahrer 12 das Garagentor 16 geöffnet hat.

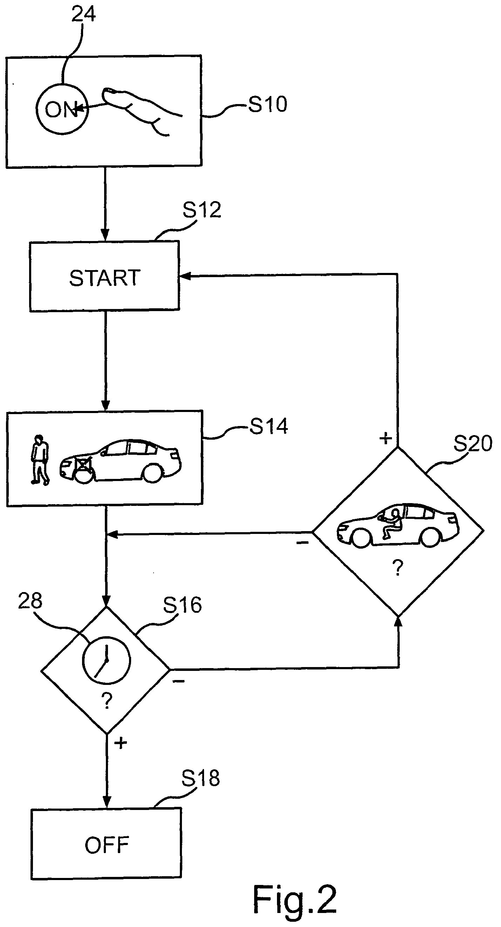

Im Folgenden ist hierzu noch einmal anhand von Fig. 2 das Verfahren erläutert, mittels welchem der Antriebsmotor 18 automatisch abgeschaltet und dann wieder gestartet wird, wenn sich der Fahrer 12 nur kurzzeitig außerhalb des Kraftwagens 10 aufhält.

Zu Beginn der Fahrt mit dem Kraftwagen 10 hat der Fahrer 12 kann in einem Schritt S10 einen Startknopf 24 in dem Kraftwagen 10 gedrückt worden sein, durch welchen die Steuereinrichtung 20 dazu veranlasst wird, den Antriebsmotor 18 in einem Schritt S12 zu starten. Der Fahrer 12 musste in diesem Fall also nicht einen Zündschlüssel in ein Zündschloss stecken und den Schlüssel dann drehen. Der Startknopf 24 stellt eine Starteinrichtung des Kraftwagens 10 dar.

Nachdem der Fahrer vor die Garage 14 gefahren ist, wird durch die Erkennungseinrichtung 22 in einem Schritt S14 erkannt, dass der Fahrer 12 aus dem Kraftwagen 10 ausgestiegen ist. Dies wird von der Erkennungseinrichtung 22 der Steuereinrichtung 20 signalisiert, welche daraufhin den Antriebsmotor 18 ausschaltet. In Fig. 2 ist dies durch einen durchgekreuzten Motorblock symbolisiert.

Nach dem Abschalten des Antriebsmotors 18 bleiben die Erkennungseinrichtung 22 und die Steuereinrichtung 20 dahingehend in Bereitschaft, dass der Antriebsmotor 18 wieder gestartet werden kann, falls durch die Erkennungseinrichtung erkannt wird, dass der Fahrer 12 zum Kraftwagen 10 zurückkehrt. Hierbei kann vorgesehen sein, dass diese Überwachung nur für einen vorbestimmten Zeitraum von beispielsweise 5 Minuten erfolgt. In diesem Fall kann dann eine entsprechende Zeitüberwachung 28 gestartet werden. Entsprechend wird in einem Schritt S16 durch die Erkennungseinrichtung 22 oder die Steuereinrichtung 20 überwacht, ob die Zeitüberwachung 28 signalisiert, dass die Überwachungszeit abgelaufen ist. Ist dies der Fall, so wird der Kraftwagen 10 in einem Schritt 18 vollständig abgeschaltet, d. h. auch die Erkennungseinrichtung 22 und Steuereinrichtung 20 werden deaktiviert.

Anstelle oder zusätzlich zu einer Überprüfung einer Zeitüberwachung 28 kann auch vorgesehen sein, beispielsweise das Abschließen einer Fahrzeugtür des Kraftwagens 10 zu erkennen und in diesem Fall unmittelbar zum Schritt S18 überzugehen, d. h. den Kraftwagen 10 vollständig zu deaktivieren.

Wird in dem Schritt S16 aber erkannt, dass die Überwachung fortzuführen ist, so wird in einem Schritt S20 überprüft, ob sich der Fahrer 12 oder eine andere Person wieder in die Nähe des Kraftwagens 10 begeben hat, in den Kraftwagen 10 eingestiegen ist oder eine Bedieneinrichtung im Kraftwagen 10 betätigt wird. Welcher dieser Aspekte hierbei durch die Erkennungseinrichtung 22 überwacht wird, ist von der konkreten Realisierung der Erkennungseinrichtung abhängig. Beispielsweise können dieselben Signale ausgewertet werden, mit denen auch erkannt wird, ob der Fahrer 12 den Kraftwagen 10 verlassen hat. Des Weiteren kann auch beispielsweise die Alarmanlage des Kraftwagens 10 genutzt werden, um ein Annhähern oder ein Einsteigen des Fahrers 12 oder einer anderen Person zu erkennen, indem beispielsweise ein Signal einer Infrarotkamera oder eines Infrarotsensors oder eines Radarsensors der Alarmanlage ausgewertet wird. Es kann aber auch vorgesehen sein, den Antriebsmotor erst dann wieder zu starten, wenn ein Bremspedal, ein Kupplungspedal oder ein Gaspedal bedient wird oder ein Ganghebel verstellt wird. Die konkrete Ausgestaltung der Erkennungseinrichtung 22 kann davon abhängig gemacht werden, wie viel Zeit benötigt wird, um den Antriebsmotor 18 wieder fahrbereit zu machen. Bei einer Brennkraftmaschine kann dies beispielsweise länger dauern als bei einem Elektromotor.

Insgesamt ist durch das Beispiel ein Konzept für alle Antriebstypen (Verbrennungsmotor, Elektromotor, Hybridantrieb) gezeigt, bei dem ein Liegenbleiben durch eine automatische Abschaltung bei Verlassen des Kraftwagens verhindert werden kann, weil mit dem Abschalten auch weitere elektrische Verbraucher abgeschaltet werden können, die ansonsten Energie aus der Fahrzeugbatterie verbrauchen. Durch das automatische Abschalten wird als weiterer Vorteil erreicht, dass sich der Kraftwagen in einem sicheren Zustand befindet, wenn der Fahrer sich nicht im Kraftwagen befindet. Insbesondere wenn sich noch Kinder im Kraftwagen aufhalten, ist dies von besonderem Vorteil, da diese den Kraftwagen dann nicht selbst in Bewegung setzen können. Indem die Antriebseinrichtung auch wieder automatisch gestartet wird, ergibt sich durch die automatische Abschaltung keine Beeinträchtigung des Bedienkomforts.

## Patentansprüche

1. Verfahren betreffend das Abschalten einer Antriebseinrichtung (18) eines Kraftwagens (10) durch eine Steuereinrichtung (20) in dem Fall, dass ein Fahrer (12) des Kraftwagens (10) diesen verlässt, mit den Schritten:
- Starten (S12) der Antriebseinrichtung (18) durch die Steuereinrichtung (20) bei Erkennen (S10) eines Bedienens einer dafür bereitgestellten Starteinrichtung (24) durch den Fahrer (12),
- durch eine Erkennungseinrichtung (22) Überwachen (S14), ob der Fahrer (12) den Kraftwagen (10) verlässt, und gegebenenfalls Abschalten (S14) der Antriebseinrichtung (18) durch die Steuereinrichtung (20), und
- durch die Erkennungseinrichtung (22) Überwachen (S20), ob wieder eine Person (12) in einem vorbestimmten Überwachungsbereich anwesend ist;
- Wiederstarten (S12) der Antriebseinrichtung (18) durch die Steuereinrichtung (20) bei Signalisieren einer Anwesenheit durch die Erkennungseinrichtung (22),
**dadurch gekennzeichnet, dass**
die Überwachung abgebrochen wird, falls eine vorbestimmte Bedienhandlung an dem Kraftwagen vorgenommen wird, insbesondere falls eine Fahrzeugtür verschlossen wird.

2. Verfahren nach Anspruch 1, wobei eine Identität zumindest einer in einer Umgebung des Kraftwagens (10) oder im Kraftwagen (10) befindlichen Person (12) erkannt wird und nur wiedergestartet wird, falls diese Person (12) zur Benutzung des Kraftwagens (10) berechtigt ist.

3. Verfahren betreffend das Abschalten einer Antriebseinrichtung (18) eines Kraftwagens (10) durch eine Steuereinrichtung (20) in dem Fall, dass ein Fahrer (12) des Kraftwagens (10) diesen verlässt, mit den Schritten:
- Starten (S12) der Antriebseinrichtung (18) durch die Steuereinrichtung (20) bei Erkennen (S10) eines Bedienens einer dafür bereitgestellten Starteinrichtung (24) durch den Fahrer (12),
- durch eine Erkennungseinrichtung (22) Überwachen (S14), ob der Fahrer (12) den Kraftwagen (10) verlässt, und gegebenenfalls Abschalten (S14) der Antriebseinrichtung (18) durch die Steuereinrichtung (20), und
- durch die Erkennungseinrichtung (22) Überwachen (S20), ob wieder eine Person (12) in einem vorbestimmten Überwachungsbereich anwesend ist;
- Wiederstarten (S12) der Antriebseinrichtung (18) durch die Steuereinrichtung (20) bei Signalisieren einer Anwesenheit durch die Erkennungseinrichtung (22),
**dadurch gekennzeichnet, dass**
eine Identität zumindest einer in einer Umgebung des Kraftwagens (10) oder im Kraftwagen (10) befindlichen Person (12) erkannt wird und nur wiedergestartet wird, falls diese Person (12) zur Benutzung des Kraftwagens (10) berechtigt ist.

4. Verfahren nach Anspruch 3, wobei die Überwachung abgebrochen wird, falls eine vorbestimmte Bedienhandlung an dem Kraftwagen vorgenommen wird, insbesondere falls eine Fahrzeugtür verschlossen wird.

5. Verfahren nach einem der vorhergehenden Ansprüche, wobei die Antriebseinrichtung (18) wiedergestartet wird, falls ein Näherkommen einer Person (12) zum Kraftwagen oder ein Einsteigen in den Kraftwagen (10) oder ein Bedienen zumindest einer vorbestimmten Bedieneinrichtung des Kraftwagens (10), welche von der Starteinrichtung (24) verschieden ist, erkannt wird.

6. Verfahren nach einem der vorhergehende Ansprüche, wobei durch die Erkennungseinrichtung (22) ein Signal zumindest einer der folgenden Einrichtungen überwacht wird:
- eines Sensors in einem Fahrzeugsitz,
- einer Ortungseinrichtung zum Orten eines Identifikations-Chips (26) eines Keyless-Go-Systems,
- eines Sensors in einer Pedale oder einem Gurt,
- eines Sensors in einer Fahrzeugtür,
- einer Alarmanlage.

7. Verfahren nach einem der vorhergehenden Ansprüche, wobei nur für ein vorbestimmtes Zeitintervall (28) nach dem Abschalten (S24) der Antriebseinrichtung (18) überwacht wird, ob eine Person in den Überwachungsbereich wiederkehrt.

8. Verfahren nach einem der vorhergehenden Ansprüche, wobei die Antriebseinrichtung wiedergestartet wird, falls durch die Erkennungseinrichtung (22) eine Betätigung einer aus den folgenden Fahrzeugkomponenten erkannt wird: einer Pedale, insbesondere eines Gaspedals, eines Bremspedals oder eines Kupplungspedals, eines Lenkrads, einer Fahrzeugtür, eines Gurts oder eines Gurtschlosses.

9. Kraftwagen (10) mit einer Antriebseinrichtung (18), einer Steuereinrichtung (20) zum Starten und Abschalten der Antriebseinrichtung und einer Erkennungseinrichtung (22) zum Überwachen einer Anwesenheit einer Person (12) in dem Kraftwagen, wobei die Steuereinrichtung (20) dazu ausgelegt ist, die Antriebseinrichtung (18) abzuschalten, falls die Erkennungseinrichtung (22) signalisiert, dass die Person (12) den Kraftwagen (10) verlässt oder verlassen hat, wobei die Steuereinrichtung (20) dazu eingerichtet ist, nach einem zuvor erkannten Aussteigen der Person (12) aus dem Kraftwagen (10) die Antriebseinrichtung (18) wiederzustarten, falls die Erkennungseinrichtung (22) erneut die Anwesenheit einer Person (12) signalisiert,
**dadurch gekennzeichnet, dass**
der Kraftwagen dazu ausgelegt ist, ein Verfahren nach einem der vorhergehenden Ansprüche durchzuführen.

## Claims

1. Method for switching off a power unit (18) of a motor vehicle (10) by a control unit (20) in the event of the vehicle driver (12) leaving the vehicle (10), with the steps:
- starting (S12) of the power unit (18) by the control unit (20) upon detection (S10) of operation by the driver (12) of starting equipment (24) provided for the purpose,
- monitoring (S14) by means of a detection device (22) whether the driver (12) leaves the vehicle (10), and possibly switching off (S14) of the power unit (18) by the control unit (20), and
- monitoring (S20) by means of a detection device (22) whether a person (12) is present again in a predetermined monitored zone;
- restarting (S12) of the power unit (18) by the control unit (20) when a presence is signalled by the detection device (22),
**characterised in that**
monitoring is discontinued if a predetermined control action is undertaken on the vehicle, in particular whether a vehicle door is shut.

2. Method according to claim 1, in which an identity of at least one person (12) present in the vicinity of the motor vehicle (10) or in the motor vehicle (10) is detected and the restarting only takes place if this person (12) is authorised to use the vehicle (10).

3. Method for switching off a power unit (18) of a motor vehicle (10) by a control unit (20) in the event of the vehicle driver (12) leaving the vehicle (10), with the steps:
- starting (S12) of the power unit (18) by the control unit (20) upon detection (S10) of operation by the driver (12) of starting equipment (24) provided for the purpose,
- monitoring (S14) by means of a detection device (22) whether the driver (12) leaves the vehicle (10), and possibly switching off (S14) of the power unit (18) by the control unit (20), and
- monitoring (S20) by means of a detection device (22) whether a person (12) is present again in a predetermined monitored zone;
- restarting (S12) of the power unit (18) by the control unit (20) when a presence is signalled by the detection device (22),
**characterised in that**
an identity of at least one person (12) present in the vicinity of the motor vehicle (10) or in the motor vehicle (10) is detected and restarting only takes place if this person (12) is authorised to use the vehicle (10).

4. Method according to claim 3, in which monitoring is discontinued if a predetermined control action is undertaken on the vehicle, in particular if a vehicle door is shut.

5. Method according to one of the above claims, in which the power unit (18) is restarted if a person (12) comes close to the vehicle, or the vehicle (10) is entered, or the operation of at least one predetermined control different to the starting equipment (24) is detected in the vehicle (10).

6. Method according to one of the above claims in which a signal from at least one of the following devices is monitored by the detection device (22):
- a sensor in the driver's seat,
- a location device to locate an identification chip (26) of a keyless go system,
- a sensor in a pedal or belt,
- a sensor in a vehicle door,
- an alarm system.

7. Method according to one of the above claims in which monitoring of whether a person returns to the monitored zone is only carried out for a predetermined time interval (28) after the power unit (18) is switched off (S24).

8. Method according to one of the above claims in which the power unit is restarted if the detection device (22) detects operation of one of the following vehicle components: a pedal, in particular the accelerator pedal, a brake pedal or a clutch pedal, a steering wheel, a vehicle door, a belt or a belt buckle.

9. Motor vehicle (10) with a power unit (18), a control unit (20) for starting and switching off the power unit (18) and a detection device (22) for monitoring the presence of a person (12) in the motor vehicle, in which the control unit (20) is designed to switch off the power unit (18) if the detection device (22) signals that the person (12) is leaving or has left the vehicle (10), the control unit (20) being designed to restart the power unit (18) after previously detecting that a person (12) has left the vehicle (10), if the detection device (22) again signals the presence of a person (12), **characterised in that** the motor vehicle is designed to implement a method according to one of the above claims.

## Revendications

1. Procédé concernant la déconnexion d'un dispositif de propulsion (18) d'un véhicule automobile (10) par un dispositif de commande (20) dans le cas où le conducteur (12) du véhicule automobile (10) quitte celui-ci, comprenant les étapes consistant à :
- démarrer (S12) le dispositif de propulsion (18) par le dispositif de commande (20) lors de la reconnaissance (S10) d'une manoeuvre d'un dispositif de démarrage affecté à cet effet (24) par le conducteur (12),
- contrôler (S14) par un dispositif de reconnaissance (22) si le conducteur (12) quitte le véhicule automobile (10) et, éventuellement, déconnecter (S14) le dispositif de propulsion (18) par le dispositif de commande (20), et
- contrôler (S20) par le dispositif de reconnaissance (22) si une personne (12) est à nouveau présente dans une zone de contrôle prédéterminée ;
- redémarrer (S12) le dispositif de propulsion (18) par le dispositif de commande (20) lors de la signalisation d'une présence par le dispositif de reconnaissance (22),
**caractérisé en ce que** :
le contrôle est interrompu dans le cas où une opération de manoeuvre prédéterminée est effectuée sur le véhicule automobile, en particulier dans le cas où une porte du véhicule est fermée.

2. Procédé selon la revendication 1, dans lequel l'identité d'au moins une personne (12) se trouvant dans l'environnement du véhicule automobile (10) ou dans le véhicule automobile (10) est reconnue et le redémarrage ne se fait qu'au cas où cette personne (12) est habilitée à utiliser le véhicule automobile (10).

3. Procédé concernant la déconnexion d'un dispositif de propulsion (18) d'un véhicule automobile (10) par un dispositif de commande (20) dans le cas où le conducteur (12) du véhicule automobile (10) quitte celui-ci, comprenant les étapes consistant à :
- démarrer (S12) le dispositif de propulsion (18) par le dispositif de commande (20) lors de la reconnaissance (S10) d'une manoeuvre d'un dispositif de démarrage affecté à cet effet (24) par le conducteur (12),
- contrôler (S14) par un dispositif de reconnaissance (22) si le conducteur (12) quitte le véhicule automobile (10) et éventuellement déconnecter (S14) le dispositif de propulsion (18) par le dispositif de commande (20) et
- contrôler(S20) par le dispositif de reconnaissance (22) si une personne (12) est à nouveau présente dans une zone de contrôle prédéterminée ;
- redémarrer (S12) le dispositif de propulsion (18) par le dispositif de commande (20) lors de la signalisation d'une présence par le dispositif de reconnaissance (22),
**caractérisé en ce que** :
l'identité au moins d'une personne (12) se trouvant dans l'environnement du véhicule automobile (10) ou dans le véhicule automobile (10) est reconnue et le redémarrage ne se fait qu'au cas où cette personne (12) est habilitée à utiliser le véhicule automobile (10).

4. Procédé selon la revendication 3, dans lequel le contrôle est interrompu dans le cas où une manoeuvre prédéterminée est effectuée sur le véhicule automobile, en particulier dans le cas où une porte du véhicule automobile est fermée.

5. Procédé selon l'une quelconque des revendications précédentes, dans lequel le dispositif de propulsion (18) est redémarré dans le cas où l'on reconnait le rapprochement d'une personne (12) du véhicule automobile ou une entrée dans le véhicule automobile (10) ou 'une manoeuvre d'au moins un dispositif de commande prédéterminé du véhicule automobile (10), qui est différent du dispositif de démarrage (24).

6. Procédé selon l'une quelconque des revendications précédentes, dans lequel le dispositif de reconnaissance (22) permet de contrôler un signal d'au moins l'un des dispositifs suivants :
- un capteur dans un siège du véhicule,
- un dispositif de détection pour détecter une puce d'identification (26) d'un système de clés mains-libres,
- un capteur dans une pédale ou une ceinture,
- un capteur dans une porte du véhicule,
- une installation d'alarme.

7. Procédé selon l'une quelconque des revendications précédentes, dans lequel, pendant seulement un intervalle de temps prédéterminé (28) après la déconnexion (S24) du dispositif de propulsion (18), on contrôle si une personne revient dans la zone de contrôle.

8. Procédé selon l'une quelconque des revendications précédentes, dans lequel le dispositif de propulsion est redémarré au cas où une commande de l'un des composants suivants du véhicule automobile est reconnue par le dispositif de reconnaissance (22) : une pédale, en particulier une pédale d'accélération, une pédale de freinage ou une pédale d'embrayage, un volant de direction, une porte du véhicule automobile, une ceinture ou une fermeture de ceinture.

9. Véhicule automobile (10) comprenant un dispositif de propulsion (18), un dispositif de commande (20) pour démarrer et déconnecter le dispositif de propulsion et un dispositif de reconnaissance (22) pour contrôler la présence d'une personne (12) dans le véhicule automobile, dans lequel le dispositif de commande (20) est conçu pour déconnecter le dispositif de propulsion (18) au cas où le dispositif de reconnaissance (22) signale que la personne (12) quitte le véhicule automobile (10) ou l'a quitté, dans lequel le dispositif de commande (20) et conçu de manière à redémarrer le dispositif de propulsion (18) après une sortie précédemment reconnue de la personne (12) du véhicule automobile (10) au cas où le dispositif de reconnaissance (22) signale à nouveau la présence d'une personne (12),
**caractérisé en ce que** :
le véhicule automobile est conçu pour réaliser un procédé selon l'une quelconque des revendications précédentes.
